Europäisches Patentamt

European Patent Office

Office européen des brevets

(19)

(11) Veröffentlichungsnummer: **0 255 688 B1**

(12) **EUROPÄISCHE PATENTSCHRIFT**

(45) Veröffentlichungstag der Patentschrift: **18.09.91**

(51) Int. Cl.5: **H01H 21/18, B60Q 1/42**

(21) Anmeldenummer: **87110958.3**

(22) Anmeldetag: **29.07.87**

(54) **Lenkstockschalter für Kraftfahrzeuge.**

(30) Priorität: **02.08.86 DE 3626242**

(43) Veröffentlichungstag der Anmeldung:
**10.02.88 Patentblatt 88/06**

(45) Bekanntmachung des Hinweises auf die
Patenterteilung:
**18.09.91 Patentblatt 91/38**

(84) Benannte Vertragsstaaten:
**ES FR GB IT**

(56) Entgegenhaltungen:
**DE-B- 2 418 600**
**DE-U- 7 326 836**
**FR-A- 1 028 070**
**US-A- 3 735 061**

(73) Patentinhaber: **SWF Auto-Electric GmbH**
**Stuttgarter Strasse 119 Postfach 135**
**W-7120 Bietigheim-Bissingen(DE)**

(72) Erfinder: **Erdelitsch, Herbert**
**Berliner Strasse 8**
**W-7120 Bietigheim-Bissingen(DE)**
Erfinder: **Machalitzky, Otto**
**Frimleystrasse 50/2**
**W-7120 Bietigheim-Bissingen(DE)**
Erfinder: **Rachner, Horst**
**Weingartweg 8**
**W-7120 Bietigheim-Bissingen(DE)**

**Beschreibung**

Die Erfindung bezieht sich auf einen Lenkstockschalter für Kraftfahrzeuge gemäß den Merkmalen des Oberbegriffs des Anspruchs 1.

Bei einem aus dem DE-U-73 26 836 bekannten Lenkstockschalter wird eine Kontaktbrücke unmittelbar von einem um eine Drehachse in mehrere Schaltstellungen verschwenkbaren Schaltglied geführt, wobei die Kontaktbrücke begrenzt radial verschiebbar ist und von einer Druckfeder gegen die Kontaktflächen von Festkontakten gedrückt wird, die auf einer Kreisbahn um die Drechachse des Schaltgliedes liegen. Die Druckfeder sorgt dabei für den nötigen Kontaktdruck zwischen der Kontaktbrücke und den Festkontakten. Darüberhinaus ermöglicht diese Druckfeder einen Toleranzausgleich, wenn die Kontaktbrücken nicht exakt auf einer Kreisbahn um die Drechachse des Schaltgliedes angeordnet sind. Ein solcher Toleranzausgleich ist jedoch nur in einem begrenzten Maße möglich, weil bei größeren Abweichungen die Gefahr eines Verkantens der Kontaktbrücke in dem Schaltglied zu befürchten ist. Eine solche Konstruktion mit einer unmittelbar von dem formstabilen Schaltglied geführten Kontaktbrücke kann also nur dann verwendet werden, wenn die räumlichen Anordnung der von dieser Kontaktbrücke beaufschlagten Festkontakte mit der Bewegungsbahn des Schaltglieds übereinstimmt. Wenn also das Schaltglied um eine Drehachse verschwenkt wird, sollten die zugehörigen Festkontakte ebenfalls auf einer Kreisbahn mit dem Mittelpunkt auf der Drehachse liegen. Ist das Schaltglied geradlinig bewegbar, müssen auch die Festkontakte längs einer Geraden angeordnet sein. Diese bisher notwendige übereinstimmung zwischen der Bewegungsrichtung des Schaltgliedes und der Ausrichtung der Festkontakte führt bei manchen Schalterkonstruktionen zu einem erhöhten Konstruktionsund Fertigungsaufwand.

Ein elektrischer Schalter mit den Merkmalen aus dem Oberbegriff des Anspruchs 1 ist aus der FR-A-10 28 070 bekannt. Bei dem Schalter aus dieser Schrift besitzt das Schaltglied einen Schaltarm, der eine Kontaktbrücke führt, teleskopartig am Schaltglied gehalten ist und gegenüber dem Schaltglied in eine radiale Richtung verschiebbar ist. Bei einer solchen Konstruktion muß der Schaltarm den Bewegungen des Schaltglieds genau folgen, seine Winkellage entspricht derjenigen des Schaltglieds. Dadurch ist ein Ausgleich zwischen der Bewegungsrichtung des Schaltglieds und davon abweichend angeordneten Festkontakten nicht in ausreichendem Maße möglich. Dies zeigt auch der elektrische Schalter nach der FR-A-10 28 070, bei dem das Schaltglied in durch eine Kulisse begrenzter Weise um einen Punkt schwenkbar ist und die Festkontakte dementsprechend auf einer Kugeloberfläche angeordnet sind.

Aufgabe der Erfindung ist es, einen Lenkstockschalter mit den Merkmalen aus dem Oberbegriff des Anspruchs 1 so weiterzubilden, daß die Lage der Festkontakte weitgehend unabhängig von einer kreisförmigen Bewegung des Schaltglieds im Schaltergehäuse festgelegt werden kann, ohne daß die Kontaktgabe zwischen der Kontaktbrücke und den Festkontakten beeinträchtigt wird. Insbesondere soll es möglich sein, die Festkontakte längs einer Geraden anzuordnen.

Diese Aufgabe wird erfindungsgemäß durch einen Lenkstockschalter gelöst, der außer den Merkmalen aus dem Oberbegriff auch die aus dem kennzeichnenden Teil des Anspruchs 1 aufweist.

Bei einem erfindungsgemäßen Lenkstockschalter muß also der Schaltarm nicht genau der Schwenkbewegung des Schaltglieds folgen. Dieser Bewegung folgt nur die Schwenkachse des Schaltarms. Der Schaltarm selbst dagegen kann Positionen einnehmen, deren Lage relativ zu den Festkontakten durch die Winkellage des Schaltglieds kaum beeinflußt wird. Dadurch ist es möglich, die Festkontakte weitgehend unabhängig von der kreisförmigen Bewegung des Schaltglieds anzuordnen.

Vorteilhafte Ausgestaltungen eines erfindungsgemäßen Lenkstockschalters kann man den Unteransprüchen entnehmen.

So wird bevorzugt der Schaltarm selbst in Richtung auf die Kontaktflächen der Festkontakte federnd vorgespannt, wozu bei einer ersten Ausführung eine zusätzliche Druckfeder verwendet wird. Diese Druckfeder zwischen dem Schaltglied und dem Schaltarm ersetzt dabei die Druckfeder, die bei einer direkten Führung der Kontaktbrücke durch das Schaltglied zwischen dem Schaltglied und der Kontaktbrücke angeordnet ist, so daß der konstruktive Aufwand gegenüber dieser bekannten Konstruktion nicht erhöht wird. Die Kontaktbrücke selbst kann dann ohne Federabstützung von dem Schaltarm geführt werden. Bei einer solchen Ausführung ist also ein Verkanten zwischen der Kontaktbrücke und der Führung am Schaltarm nicht zu befürchten.

Gemäß einer besonders vorteilhaften Weiterbildung der Erfindung sind das Schaltglied und der Schaltarm einstückig aus Kunststoff gefertigt und über eine Art Filmscharnier miteinander verbunden. Dieses Filmscharnier sichert die erforderliche Beweglichkeit des Schaltarmes, kann jedoch zusätzlich so ausgebildet sein, daß über dieses Filmscharnier eine Federwirkung erzeugt wird, die das freie Ende des Schaltarmes in Richtung auf die Kontaktflächen der Festkontakte vorspannt. In einem solchen Fall könnte man möglicherweise auf eine zusätzliche Druckfeder verzichten, insbesondere wenn die Kontaktbrücke als Blattfeder ausgebildet ist, die quer zu ihrer Schaltrichtung abgewinkelte Vorsprünge aufweist, die sich an ortsfesten Führungsanschlägen parallel zu den Kontaktflächen abstützen. Bei einer solchen Ausführung wird also der Kontaktdruck durch eine entsprechende Ausbildung und Abstützung der als Blattfeder ausgebildeten Kontaktbrücke selbst erzeugt, wobei die im Filmscharniergelenk innenwohnende Federwirkung lediglich die Aufgabe hat, den Eingriff zwischen dem Schaltarm und dieser Blattfeder zu sichern.

Den Grundgedanken der vorliegenden Erfindung kann man mit besonderem Vorteil dann einsetzen, wenn bei einem bevorzugten Ausführungsbeispiel die Festkontakte aus einer Blechplatine ausgestanzt, rechtwinklig abgebogen und in einer Ebene parallel zur Drechachse des Schaltgliedes ausgerichtet sind, wobei die Blechplatine in einer senkrecht zur Drechachse des Schaltgliedes angeordneten Schaltergrundplatte vorzugsweise durch Umspritzen festgelegt ist. Bei einer solchen Ausführung mit aus einer Blechplatine ausgestanzten Festkontakten würden nämlich besondere fertigungstechnische Probleme entstehen, wenn man die Festkontakte längs einer Kreisbahn ausrichten wollte. Die einzelnen Festkontakte müßten dann nämlich nach dem Abbiegen noch in einem zusätzlichen Arbeitsgang verschränkt werden.

Die Erfindung und deren vorteilhafte Ausgestaltungen werden nachstehend anhand des in den Zeichnungen dargestellten Ausführungsbeispiels näher erläutert. Es zeigen:

Fig. 1    eine Draufsicht auf einen leukstockschalter,

Fig. 2    eine Ansicht des Schaltgliedes,

Fig. 3    einen Schnitt durch das Schaltglied entlang der Schnittlinie III-III,

Fig. 4    eine Ansicht eines Rasthebels und

Fig. 5    einen Teilschnitt durch den Schalter längs der Schnittlinie V-V in Fig. 1.

Zu dem Schalter gehört ein Gehäuseoberteil 10 mit zwei parallel zueinander ausgerichteten Seitenwänden 11 und 12 und einer Stirnwand 13, aus dem ein nur angedeuteter Schalthebel 14 herausragt. Mit diesem Schalthebel ist formschlüssig ein Rasthebel 15 verbunden, der an einem Drehzapfen 16 schwenkbar gelagert ist. Dieser Rasthebel 15 hat einstückig einen Auslegerarm 17 mit einer Rastnocke 18, die über die Druckfeder 19 federnd abgestützt ist und in bekannter Weise mit einer Rastkurve 20 zusammenwirkt. Der Schalthebel 14 ist also zusammen mit dem Rasthebel in mehrere Schaltstellungen verschwenkbar. Man könnte den Schalthebel 14 und den Rasthebel 15 auch einstückig ausbilden, doch wird die hier beschriebene Ausführung bevorzugt, weil dann ein bestimmter Schaltertyp leicht mit unterschiedlichen Schalthebeln ausgerüstet werden kann, was von manchen Automobilherstellern gewünscht wird.

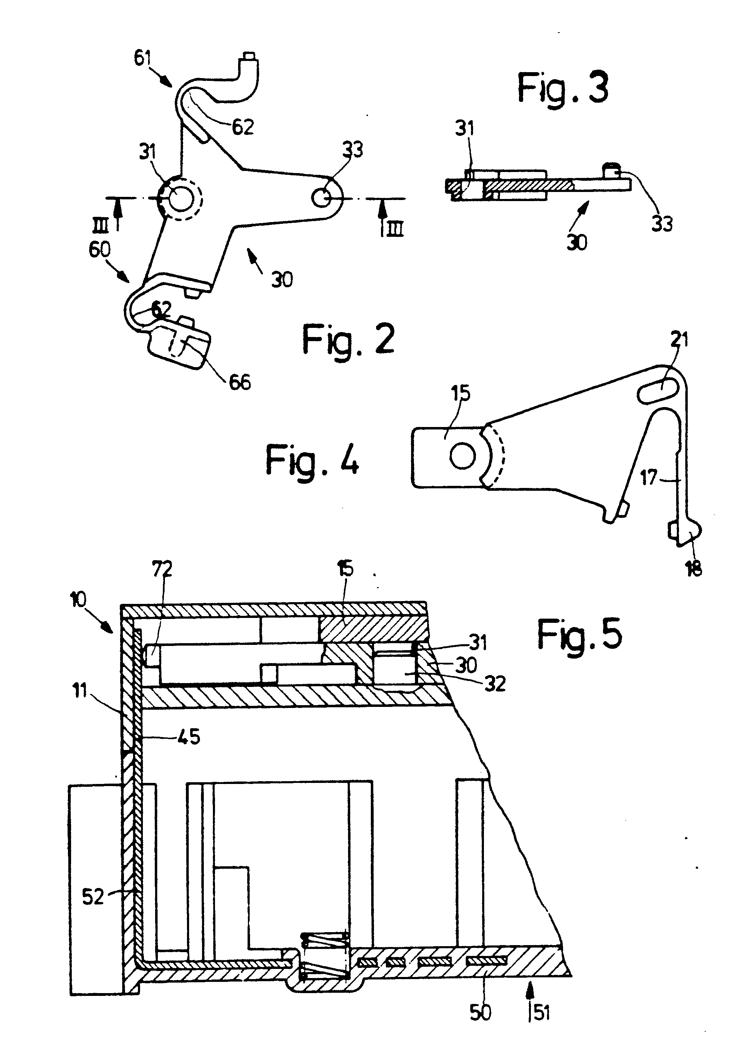

Das in Fig. 2 und 3 im einzelnen dargestelle Schaltglied 30 hat eine Lagerbohrung 31, in die ein Lagerzapfen 32 eingreift. Im Abstand zur Lagerbohrung 31 steht von dem Schaltglied 30 ein Mitnehmerzapfen 33 ab, der in eine Langlochbohrung 21 im Rasthebel 15 eingreift. Das Schaltglied 30 ist also unabhängig von dem Schalthebel bzw. dem Rasthebel 15 im Schaltergehäuse um eine Drechachse A ebenfalls in mehrere Schaltstellungen verschwenkbar.

Von diesem Schaltglied 30 werden zwei Kontaktbrücken 35 und 36 gesteuert. Die Kontaktbrücke 35 arbeitet mit Festkontakten 40,41,42,43 und 44 zusammen, die in der Seitenwand 12 derart fixiert sind, daß deren Kontaktflächen längs einer Geraden G bzw. in einer Ebene E liegen, die parallel zur Drechachse A des Schaltgliedes 30 ausgerichtet ist. Die andere Kontaktbrücke 36 arbeitet mit Festkontakten 45,46,47 und 48 zusammen, die in gleicher Weise in der anderen Seitenwand 11 festgelegt sind.

Durch Fig. 5 soll angedeutet werden, daß alle diese Festkontakte aus einer gemeinsamen Blechplatine ausgestanzt sind, die durch Umspritzen in einer Grundplatte 50 eines Gehäuseunterteils 51 festgelegt sind, auf die das Gehäuseoberteil 10 mit dem hier interessierenden Schalter aufgesetzt ist. Aus dieser Blechplatine sind Leiterbahnen 52 ausgestanzt, die rechtwinklig abgebogen sind, in das Gehäuseoberteil 10 hineinragen, und dort als Festkontakte mit den Kontaktbrücken 35 bzw. 36 zusammenwirken.

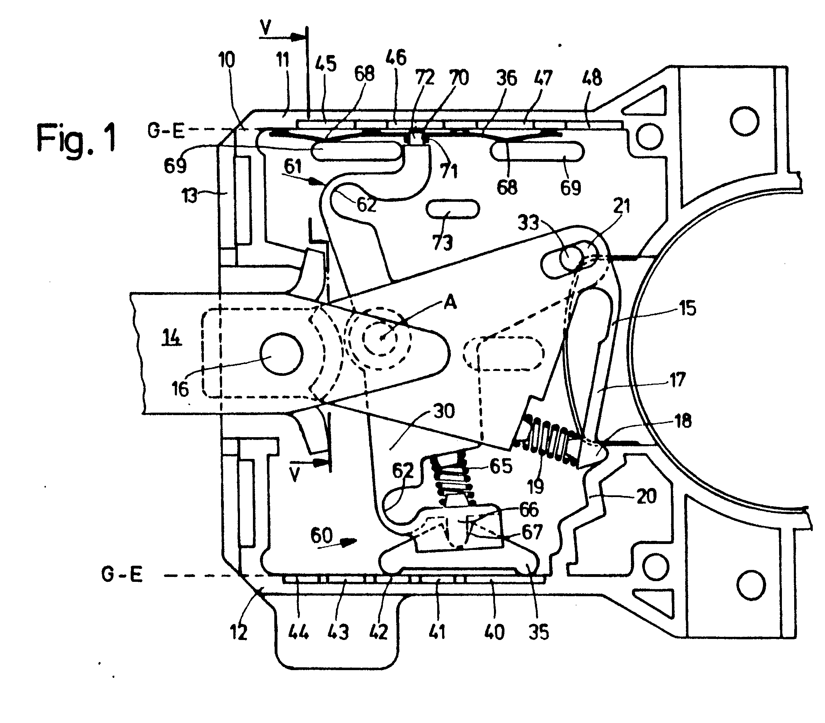

Insbesondere aus Fig. 1 wird deutlich, daß die Kontaktflächen dieser Festkontakte längs einer Geraden bzw. in der Ebene E angeordnet sind, während das die Kontaktbrücken mitnehmende Schaltglied verschwenkbar ist. Die durch das Schaltglied vorgegebene Bewegungsbahn der Kontaktbrücke stimmt also nicht mit der Ausrichtung der Festkontakte überein. Dies hat bei der erfindungsgemäßen Ausbildung des Schalters aber keinen nachteiligen Einfluß auf die Kontaktgabe, weil hier ein Bewegungsausgleich geschaffen wird. Dazu hat das Schaltglied 30 zwei Schaltarme 60 und 61, die zusammen mit dem Schaltglied 30 einstückig aus Kunststoff gefertigt sind. Jeder Schaltarm 60, 61 ist über eine Art Filmscharniergelenk 62 mit dem Schaltgliedgrundkörper verbunden, wobei dieses Filmscharniergelenk 62 derart ausgebildet ist, daß das freie Ende eines jeden Schaltarms 60,61 um eine Achse parallel zur Drechachse A des Schaltglied 30 schwenkbar an diesem angelenkt ist. Des freie Ende des Schaltarms 60,61 ist also im wesentlichen radial gegenüber dem Schaltglied 30 auslenkbar.

In Fig. 1 sind nun zwei unterschiedliche Möglichkeiten der Führung und Fixierung der kontaktbrücken 35 bzw. 36 an diesen Schaltarmen 60 bzw. 61 dargestellt. Bei dem einen Ausführungsbeispiel wird der Schaltarm 60 über eine Druckfeder 65 am Schaltglied 30 abgestützt, die nahezu senkrecht zur Kontaktflächenebene E der Festkontakte wirkt und den Schaltarm 60 in Richtung auf die Kontaktflächen der Festkontakte federnd vorspannt. Nahe dem freien Ende des Schaltarms 60 ist einstückig ein parallel zur Drechachse A des Schaltgliedes 30 ausgerichteter Steg 66 ausgebildet, der in eine randoffene Aussparung 67 der als starres Kontaktblech ausgebildeten Kontaktbrücke 35 hineinragt und damit als Mitnehmer und Abstützung für diese Kontaktbrücke 35 dient. Diese starre Kontaktbrücke 35 ist also schwenkbar an dem Schaltarm aufgehängt, wobei der Kontaktdruck von der zusätzlichen Druckfeder 65 und - in geringem Umfang - natürlich auch von der dem Filmscharniergelenk 62 innewohnenden Federwirkung aufgebracht wird.

Die andere Kontaktbrücke 36 ist als Blattfeder ausgebildet, die quer zu ihrer Schaltrichtung abgewinkelte Vorsprünge 68 aufweist, die sich an ortsfesten Führungsanschlägen 69 parallel zur Kontaktflächenebene E abstützen. Bei dieser Ausführung wird also der Kontaktdruck durch besondere Ausgestaltung und Abstützung der blattfederartigen kontakfbrücke 36 selbst erzeugt, wobei die federnde Auslenkbarkeit des Schaltarmes 61 im wesentlichen nur dazu notwendig ist, daß ein sicherer Eingriff zwischen diesem Schaltarm und dieser Kontaktbrücke 36 gewährleistet ist. Dazu hat die Kontaktbrücke 36 zwischen den Vorsprüngen 68 einen Durchbruch 70 mit einem vom Rand wenigstens abschnittsweise abstehenden Kragen 71, in die ein vom Schaltarm 61 abstehender Zapfen 72 mit verjüngtem Querschnitt eingreift. Außerdem ist eine ortsfeste Abstützrippe 73 parallel zur Kontaktflächenebene E und im Abstand davon angeordnet, die wenigstens auf einem Teil der Verstellbewegung des Schaltarmes 61 eine Entkopplung zwischen Zapfen 70 und der blattfederartigen Kontaktbrücke 36 verhindert. Bei einem Verschwenken des Schaltgliedes 30 im Uhrzeigersinn wird also das freie Ende dieses Schaltarmes 61 an diese Abstützrippe 73 anschlagen, wodurch auch bei nachlassender Elastizität in dem Filmscharniergelenk 62 verhindert wird, daß der Zapfen 72 aus dem Durchbruch 70 in der Kontaktbrücke 36 herausgleitet.

Insgesamt ist also festzustellen, daß durch die Führung der Kontaktbrücken an einem gegenüber dem Schaltglied auslenkbaren Schaltarm ein Bewegungsausgleich zwischen der kreisförmigen Bewegung des Schaltgliedes und der in einer Ebene angeordneten Kontaktbahn, also den Kontaktstellen zwischen der Kontaktbrücke und den Festkontakten geschaffen wird, so daß auch nach längerer Betriebszeit ein gleichmäßiger Kontaktdruck gewährleistet ist. Für den Konstrukteur ist damit eine Möglichkeit geschaffen, die Festkontakte weitgehend unabhängig im Gehäuse zu fixieren. Insbesondere besteht nun eben die Möglichkeit, alle Festkontakte längs einer Geraden bzw. deren kontaktflächen in einer Ebene anzuordnen, so daß auch bei einem Schalter mit aus einer Blechplatine ausgestanzten Leiterbahnen und Festkontakten keine Probleme entstehen. Die Festkontakte könnten nun auch als Leiterbahnen auf einer üblichen gedruckten Leiterplatine ausgebildet werden und als separates Bauteil in dem Schaltergehäuse verrastet werden.

Natürlich ist der Grundgedanke der vorliegenden Erfindung auch bei einer anderen Ausrichtung der Festkontakte anwendbar. Bei einer entsprechende. konstruktiven Auslegung könnten die Festkontakte auch auf einer Kreisbahn angeordnet sein, deren Mittelpunkt gegenüber der Drechachse A des Schaltgliedes versetzt ist.

Abschließend wird noch darauf hingewiesen, daß bei dem in der Zeichnung dargestellen Schalter durch die gewählte Anordnung der Festkontakte 40 bis 44 und deren längenmäßige Abstimmung mit der Länge der Kontaktbrücke 35 eine für einen speziellen Anwendungsfall vorgesehene Schaltung mit nur einer Kontaktbrücke realisiert werden konnte. Man erkennt aus Fig. 1, daß die Länge des Festkontaktes 40 mehr als doppelt so groß ist wie die Länge der übrigen Festkontakte 41 bis 44 und daß die Länge der Kontaktbrücke 35 so gewählt ist, daß in der gezeichneten Null-Stellung zwischen den von der Kontaktbrücke beaufschlagten Festkontakten 40 und 42 ein Festkontakt 41 stromlos bleibt, während in den anderen Schaltstellungen zwischen den beaufschlagten Festkontakten 40 und 43 bzw. 41 und 44 jeweils zwei Festkontakte, nämlich 41 und 42 bzw. 42 und 43 stromlos bleiben. Der Festkontakt 40 ist mit der in der Kraftfahrzeugtechnik bekannten Klemme 31, der Festkontakt 42 mit der Klemme 31b verbunden. In der Nullstellung des Schalters sind also die Klemme 31 und die Klemme 31b elektrisch leitend miteinander verbunden. In der nächsten Schaltstellung des Schalthebels dieses Fahrtlichtschalters ist der an die Klemme 31 angeschlossene Festkontakt 40 mit dem an die Klemme 31a angeschlossenen Festkontakt 43 verbunden. Es handelt sich dabei um die Begrenzungslichtstellung des Schalthebels. In der dritten Schaltstellung, der Hauptlichtstellung verbindet die Kontaktbrücke 35 die Festkontakte 41 und 44, die mit den Klemmen X bzw. 56 verbunden sind.

**Patentansprüche**

1. Lenkstockschalter für Kraftfahrzeuge, mit einem Schalthebel (14) und einem von diesem Schalthebel (14) um eine Drehachse (A) in mehrere Schaltstellungen verschwenkbaren Schaltglied (30), das eine Kontaktbrücke (35) mitnimmt, die in den einzelnen Schalstellungen federnd auf Kontaktflächen unterschiedlicher Festkontakte (40,...48) aufliegt und von einem relativ zum Schaltglied (30) im wesentlichen radial auslenkbaren Schaltarm (60,61) geführt ist, dadurch gekennzeichnet, daß der Schaltarm (60, 61) um eine Achse parallel zur Drehachse (A) des Schaltglieds (30) schwenkbar am Schaltglied (30) angelenkt ist.

2. Lenkstockschalter nach Anspruch 1, dadurch gekennzeichnet, daß der Schaltarm (60,61) in Richtung auf die Kontaktflächen der Festkontakte (40....48) federnd vorgespannt ist.

3. Lenkstockschalter nach Anspruch 2, dadurch gekennzeichnet, daß der Schaltarm (60,61) über eine zusätzliche Druckfeder (65) am Schaltglied (30) abgestützt ist.

4. Lenkstockschalter nach einem der Ansprüche 1 bis 3, dadurch gekennzeichnet, daß das Schaltglied (30) und der Schaltarm (60,61) einstückig aus Kunststoff gefertigt und über eine Art Filmscharniergelenk (62) miteinander verbunden sind.

5. Lenkstockschalter nach Anspruch 4, dadurch gekennzeichnet, daß das freie Ende des Schaltarms (60,61) aufgrund einer in das Filmscharniergelenk (62) integrierten Federwirkung in Richtung auf die Kontaktflächen der Festkontakte (40...48) federnd vorgespannt ist.

6. Lenkstockschalter nach einem der vorhergehenden Ansprüche, dadurch gekennzeichnet, daß die Kontaktbrücke (35) als starres Kontaktblech ausgebildet ist, das schwenkbar am freien Ende des Schaltarms (60) aufgehängt ist.

7. Lenkstockschalter nach Anspruch 6, dadurch gekennzeichnet, daß nahe dem freien Ende des Schaltarms (60) vorzugsweise einstückig ein parallel zur Drehachse (A) des Schaltgliedes (30) ausgerichteter Steg (66) ausgebildet ist, der in eine randoffene Aussparung (67) in der Kontaktbrücke (35) hineinragt und als Mitnehmer und Abstützung für diese Kontaktbrücke (35) dient.

8. Lenkstockschalter nach einem der Ansprüche 1 bis 5, dadurch gekennzeichnet, daß die Kontaktbrücke (36) als Blattfeder ausgebildet ist, die quer zu ihrer Schaltrichtung abgewinkelte Vorsprünge (68) aufweist, die sich an ortsfesten Führungsanschlägen (69) parallel zur Kontaktflächenebene (E) abstützen.

9. Lenkstockschalter nach Anspruch 8, dadurch gekennzeichnet, daß die blattfederartige Kontaktbrücke (36) zwischen den Vorsprüngen (68) einen Durchbruch (70) aufweist, in die ein am Ende des Schaltarms (61) ausgebildeter Zapfen (72) formschlüssig eingreift.

10. Lenkstockschalter nach Anspruch 9, dadurch gekennzeichnet, daß vom Rand des Durchbruchs (70) wenigstens abschnittsweise ein den Zapfen (72) führender Kragen (71) absteht.

11. Lenkstockschalter nach einem der Ansprüche 8 bis 10, dadurch gekennzeichnet, daß eine ortsfeste vorzugsweise parallel zur Kontaktflächenebene (E) ausgerichtete Abstützrippe (73) wenigstens auf einem Teil der Verstellbewegung des Schaltgliedes (30) eine Entkopplung zwischen dem Zapfen (72) am Schaltarm (61) und der blattfederartigen Kontaktbrücke (36) verhindert.

12. Lenkstockschalter nach einem der vorhergehenden Ansprüche, dadurch gekennzeichnet, daß die Festkontakte (40...48) aus einer Blechplatine ausgestanzt, rechtwinklig abgebogen und in einer Ebene (E) parallel zur Drechachse (A) des Schaltgliedes (30) ausgerichtet sind, wobei die Blechplatine in einer senkrecht zur Drechachse (A) des Schaltgliedes (30) angeordneten Schaltergrundplatte (50) vorzugsweise durch Umspritzen festgelegt ist.

**Claims**

1. An electric switch, especially a steering column switch for motor vehicles, comprising a switch lever (14) and a switch member (30) swivellable by this switch lever (14) around an axis of rotation (A) into several switching positions, which switch member via a switching arm (60, 61) carries a bridging contact (35) guided by said switching arm and reslliently lying on contact areas of different stationary contacts (40...48) in different switching positions, characterised in that the switching arm (60, 61) is swivellably mounted to the switch member (30) around an axis in parallel direction to the axis of rotation (A) of the switch member (30).

2. An electric switch according to claim 1, characterised in that the switching arm (60, 61) is resiliently tensioned in the direction of the contact areas of the stationary contacts (40...48).

3. An electric switch according to claim 2, characterised in that the switching arm (60) at the switch member (30) is supported via an additional pressure spring (65).

4. An electric switch according one of claims 1 to 3, characterised in that the switch member (30) and the switching arm (60, 61) are integrally made of plastics and are connected by a kind of film hinge (62).

5. An electric switch according to claim 4, characterised in that the free end of the switching arm (60, 61) is resiliently tensioned in the direction of the contact areas of the stationary contacts (40...48) because of a spring effect integrated into the film hinge (62).

6. An electric switch according to on of the preceding claims, characterised in that the bridging contact (35) is formed as a rigid contact metal which is swivellably hung onto the free end of the switching arm (60).

7. An electric switch according to claim 6, characterised in that next to the free end of the switching arm (60) a web (66) preferably integrally formed is arranged in parallel to the axis of rotation (A) of the switch member (30), which web (66) projects into an open recess (67) of the bridging contact (35) and serves as a carrier of and a support for this bridging contact (35).

8. An electric switch according to one of claims 1 to 5, characterized in that the bridging contact (36) is formed as a leaf spring comprising projections (68) deflected transversally to its switching direction supported on stationary guide stops (69) in parallel to the contact area plane (E).

9. An electric switch according to claim 8, characterised in that the leaf spring-like bridging contact (36) comprises an aperture (70) between the projections (68) which aperture is entered in a form-fit manner by a pin (72) formed onto the end of the switching arm (61).

10. An electric switch according to claim 9, characterised in that a collar (71) guiding the pin (72) extends the edge of the aperture (70).

11. An electric switch according to one of claims 8 to 10, characterised in that a stationary supporting rib (73) preferably arranged in parallel to the contact area plane (E) prevents - at least for a certain part of the adjusting movement of the switching member (30) - the pin (72) on the switching arm (61) and the leaf spring-like bridging contact (36) from being decoupled.

12. An electric switch according to one of the preceding claims, characterised in that the stationary contacts (40...48) are punched out of a sheet metal blank, are rectangularly deflected and are arranged in a plane (E) in parallel to the axis of rotation (A) of the switch member (30) whereby the sheet metal blank is fixed - preferably by extrusion-coating - into a switch base plate (50) rectangularly attached to the axis of rotation (A) of the switch member (30).

## Revendications

1. Commutateur fixé à la colonne de direction de véhicules automobiles, comportant un levier de commutation (14) et un organe de commutation (30), qui peut être pivoté par ce levier de commutation (14) dans plusieurs positions de commutation autour d'un axe de rotation (A) et qui entraîne avec lui un pont de contact (35) qui repose élastiquement, dans les différentes positions de commutation, sur les faces de contact de différents contacts fixes (40...48) et est guidé par un bras de commutation (60, 61) pouvant être déployé sensiblement radialement par rapport à l'organe de commutation (30), caractérisé en ce que le bras de commutation (60, 61) est articulé à l'organe de commutation (30) avec possibilité de pivotement autour d'un axe parallèle à l'axe de rotation (A) de l'organe de commutation (30).

2. Commutateur fixé à la colonne de direction selon la revendication 1, caractérisé en ce que le bras de commutation (60, 61) est élastiquement précontraint en direction des faces de contact des contacts fixes (40...48).

3. Commutateur fixé à la colonne de direction selon la revendication 2, caractérisé en ce que le bras de commutation (60, 61) est en appui contre l'organe de commutation (30) à l'aide d'un ressort de pression additionnel (65).

4. Commutateur fixé à la colonne de direction selon l'une des revendications 1 à 3, caractérisé en ce que l'organe de commutation (30) et le bras de commutation (60, 61) sont faits d'une pièce en matière plastique et sont mutuellement reliés par l'intermédiaire d'un genre de charnière d'articulation pelliculaire (62).

5. Commutateur fixé à la colonne de direction selon la revendication 4, caractérisé en ce que l'extrémité libre du bras de commutation (60, 61) est élastiquement précontrainte en direction des faces de contact des contacts fixes (40...48) sur la base d'un effet de ressort inhérent à la charnière d'articulation pelliculaire (62).

6. Commutateur fixé à la colonne de direction selon l'une des revendications précédentes, caractérisé en ce que le pont de contact (35) est conçu comme tôle de contact rigide, accrochée avec possibilité de pivotement à l'extrémité libre du bras de commutation (60).

7. Commutateur fixé à la colonne de direction selon la revendication 6, caractérisé en ce qu'une barrette (66) est configurée de préférence solidairement à proximité de l'extrémité libre du bras de commutation (60), en étant orientée parallèlement à l'axe de rotation (A) de l'organe de commutation (30), et elle pénètre dans un évidement (67) ouvert sur le bord du pont de contact (35) et sert d'élément entraîneur et d'appui pour se pont de contact (35).

8. Commutateur fixé à la colonne de direction selon l'une des revendications 1 à 5, caractérisé en ce que le pont de contact (36) est conçu comme ressort à lame, présentant des parties en saillie (68), coudées perpendiculairement à sa direction de commutation, qui s'appuient contre des butées de guidage fixes (69) parallèles au plan (E) des faces de contact.

9. Commutateur fixé à la colonne de direction selon la revendication 8, caractérisé en ce que le pont de contact du genre ressort à lame (36) présente, entre les parties en saillie (68), un ajour (70) dans lequel s'engage par complémentarité de forme un tenon (72) configuré à l'extrémité du bras de commutation (61).

10. Commutateur fixé à la colonne de direction selon la revendication 9, caractérisé en ce qu'un collet (71), guidant le tenon (72), fait saillie au moins sur une partie du bord de l'ajour (70).

11. Commutateur fixé à la colonne de direction selon l'une des revendications 8 à 10, caractérisé en ce qu'une nervure de soutien fixe (73), orientée de préférence parallèlement au plan (E) des faces de contact, empêche, au moins sur une partie du mouvement de déplacement de l'organe de commutation (30), un désaccouplement entre le tenon (72) du bras de commutation (61) et le pont de contact du genre ressort à lame (36).

12. Commutateur fixé à la colonne de direction selon l'une des revendications précédentes, caractérisé en ce que les contacts fixes (40...48) sont découpés dans un larget de tôle, recourbés à angle droit et orientés dans un plan (E) parallèle à l'axe de rotation (A) de l'organe de commutation (30), le larget de tôle étant fixé de préférence par enrobage dans un socle de commutateur (50) disposé perpendiculairement à l'axe de rotation (A) de l'organe de commutation (30).

Fig. 1

Fig. 3

Fig. 2

Fig. 4

Fig. 5